(19) Europäisches Patentamt
European Patent Office
Office européen des brevets

(11) EP 4 617 058 A1

(12) **EUROPEAN PATENT APPLICATION**
published in accordance with Art. 153(4) EPC

(43) Date of publication:
**17.09.2025 Bulletin 2025/38**

(21) Application number: **23888755.8**

(22) Date of filing: **09.11.2023**

(51) International Patent Classification (IPC):
***B32B 27/36*** (2006.01) ***B32B 7/023*** (2019.01)
***B32B 27/30*** (2006.01) ***G02B 27/01*** (2006.01)

(52) Cooperative Patent Classification (CPC):
**B32B 7/023; B32B 27/30; B32B 27/36; G02B 27/01**

(86) International application number:
**PCT/JP2023/040330**

(87) International publication number:
**WO 2024/101410 (16.05.2024 Gazette 2024/20)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **10.11.2022 JP 2022180315**
**03.04.2023 JP 2023059936**

(71) Applicant: **MITSUBISHI GAS CHEMICAL COMPANY, INC.**
**Chiyoda-ku**
**Tokyo 100-8324 (JP)**

(72) Inventors:
- **IZUMI, Ryunosuke**
  **Tokyo 125-8601 (JP)**
- **YAMAGUCHI, Madoka**
  **Tokyo 125-8601 (JP)**

(74) Representative: **Hoffmann Eitle**
**Patent- und Rechtsanwälte PartmbB**
**Arabellastraße 30**
**81925 München (DE)**

(54) **MULTILAYER OBJECT AND DUST-PROOF COVER FOR HEAD-UP DISPLAY**

(57) Provided are a multilayered article and a dustproof cover for a head-up display using the multilayered article. A multilayered article having a polycarbonate resin layer containing a polycarbonate resin and a sulfonic acid metal salt and an acrylic resin layer having a thickness of 1 to 80 μm and containing an acrylic resin, wherein the content of the sulfonic acid metal salt in the polycarbonate resin layer is 0.01 to 0.80% by mass, and the haze of the multilayered article is 20% or less.

Fig. 1

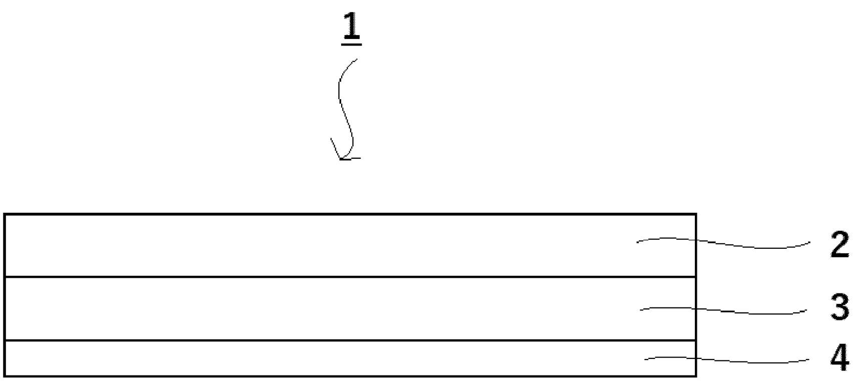


EP 4 617 058 A1

## Description

[Technical Field]

The present invention relates to a multilayered article and a dustproof cover for a head-up display. More particularly, the present invention relates to a multilayered article having a polycarbonate resin layer and an acrylic resin layer.

[Background Art]

Polycarbonate resins have, in addition to their excellent transparency, excellent processability and impact resistance as compared with glass, and there is no concern of toxic gas as compared with other plastic materials, so that they have been widely used in various fields and have been used also as thermoforming materials for vacuum forming, pressure forming, and the like.

In contrast, polycarbonate resins generally have low surface hardness, so that formed articles made of polycarbonate resins tend to suffer scratches on their surfaces. Then, when a polycarbonate resin is formed into a film, it is being studied to form a layer containing an acrylic resin or a hard coat layer (protective layer) on the surface so as not to form a scratch on the product surface. Such a multilayered article is described in Patent Literature 1 or Patent Literature 2.

[Citation List]

[Patent Literature]

[Patent Literature 1]
International Publication No. WO 2016/060100
[Patent Literature 2]
International Publication No. WO 2021/215435

[Summary of Invention]

[Technical Problem]

Here, a multilayered article having a layer containing a polycarbonate resin (polycarbonate resin layer) and a layer containing an acrylic resin (acrylic resin layer) is sometimes required to have flame resistance. Such a multilayered article is also required to have transparency.

The present invention is intended to solve such problems, and it is an object of the present invention to provide a multilayered article having excellent flame resistance and high transparency and a dustproof cover for a head-up display using the multilayered article.

[Solution to Problem]

Based on the above problems, the present inventor has studied, and as a result, found that the acrylic resin layer is more flammable than the polycarbonate resin layer. However, even if a flame retardant was blended in the acrylic resin layer, it was difficult to obtain a multilayered article satisfying the Federal Motor Vehicle Safety Standards (FMVSS). Then, as a result of studies, the present inventor has found that by blending a prescribed flame retardant in the polycarbonate resin layer and by decreasing the thickness of the acrylic resin layer, the above problems can be solved.

Specifically, the above problems have been solved by the following means.

<1> A multilayered article having a polycarbonate resin layer comprising a polycarbonate resin and a sulfonic acid metal salt, and an acrylic resin layer having a thickness of 1 to 80 μm and comprising an acrylic resin, a content of the sulfonic acid metal salt in the polycarbonate resin layer being 0.01 to 0.80% by mass, wherein a haze of the multilayered article is 20% or less

<2> The multilayered article according to <1>, wherein the haze of the multilayered article is 10% or less.

<3> The multilayered article according to <1> or <2>, wherein the acrylic resin layer has a thickness of 10 to 80 μm.

<4> The multilayered article according to any one of <1> to <3>, wherein the pencil hardness of the multilayered article, as measured from the acrylic resin layer side, is F or harder.

<5> The multilayered article according to any one of <1> to <4>, wherein the acrylic resin layer of the multilayered article contains a flame retardant.
<6> The multilayered article according to <1> or <2>, wherein the acrylic resin layer has a thickness of 1 to 10 μm.
<7> The multilayered article according to <6>, wherein the acrylic resin layer of the multilayered article does not substantially contain a flame retardant.
<8> The multilayered article according to any one of <1> to <7>, further having one or more hard coat layers.
<9> A dustproof cover for a head-up display, comprising the multilayered article according to any one of <1> to <8>.

[Advantageous Effect of Invention]

The present invention makes it possible to provide a multilayered article having excellent flame resistance and high transparency and a dustproof cover for a head-up display using this.

[Brief Description of Drawing]

[Figure 1] Figure 1 is a diagram schematically showing layer constitution of the multilayered article of the present invention.

[Description of Embodiment]

Hereinafter, the mode for carrying out the present invention (referred to as the "present embodiment" simply hereinafter) will be described in detail. The present embodiment below is an example for describing the present invention, and the present invention is not limited to the present embodiment only.
In the present specification, "to" is used to mean that the numeral values described before and after that are included as the lower limit and the upper limit.
In the present specification, various physical property values and characteristic values are those at 23°C unless otherwise noted.
In the present specification, a weight average molecular weight and a number average molecular weight are those in terms of polystyrene measured by GPC (gel permeation chromatography) unless otherwise noted.
In the present specification, "(meth)acrylate" represents both acrylate and methacrylate, or any of them.
The multilayered article in the present specification is intended to include an article in the form of a film or a sheet. The "film" and the "sheet" each refer to a formed article that has a small thickness as compared with the length and the width and is almost flat. The "film" and the "sheet" in the present specification may be each single-layered or multilayered.
When measurement methods, etc. described by the standards stated in the present specification vary depending on the year, they are based on the standards as of January 1, 2022, unless otherwise noted.
The drawing attached to the present specification is a schematic diagram, and the reduction scale, etc. may not be consistent with reality.
In the present specification, near infrared ray is a light having a wavelength of 700 nm to 2500 nm.
The multilayered article of the present embodiment is a multilayered article having a polycarbonate resin layer comprising a polycarbonate resin and a sulfonic acid metal salt and an acrylic resin layer having a thickness of 1 to 80 μm and comprising an acrylic resin, a content of the sulfonic acid metal salt in the polycarbonate resin layer being 0.01 to 0.80% by mass, wherein a haze of the multilayered article is 20% or less.
By taking such constitution, a multilayered article having excellent flame resistance and high transparency is obtained.
The acrylic resin is inherently flammable, and even if a flame retardant is blended in the acrylic resin layer only, it is difficult to achieve flame resistance that can pass the FMVSS test. Then, in the present embodiment, by blending a flame retardant in the polycarbonate resin layer and by decreasing the thickness of the acrylic resin layer, passing of the FMVSS test is made possible. It goes without saying that even a multilayered article having flame resistance that does not pass the FMVSS test is included in the scope of the present invention as long as the effect of the present invention is exerted.
If a large amount of a flame retardant is blended in the polycarbonate resin layer, transparency is deteriorated. In the present embodiment, by adopting a sulfonic acid metal salt as a flame retardant, a multilayered article that can demonstrate flame resistance with the addition of a small amount of the flame retardant and exhibits excellent transparency is obtained.
Hereinafter, the present invention will be described in detail.

<Polycarbonate resin layer>

The polycarbonate resin layer in the present embodiment contains a polycarbonate resin and a sulfonic acid

metal salt, and the content of the sulfonic acid metal salt in the polycarbonate resin layer is 0.01 to 0.80% by mass.

The polycarbonate resin is not particularly limited as long as it contains, in a molecular main chain, a -[O-R-OCO]-constitutional unit (R is a hydrocarbon group (for example, that containing an aliphatic group, an aromatic group, or both an aliphatic group and an aromatic group, or that further having a straight-chain structure or a branched structure)) containing a carbonate ester bond, and various polycarbonate resins can be used.

In the present embodiment, the polycarbonate resin preferably contains a bisphenol polycarbonate resin. The bisphenol polycarbonate resin refers to a resin in which 80% by mol or more, preferably 90% by mol or more, more preferably 95% by mol or more, of the constitutional units to constitute the polycarbonate resin are carbonate constitutional units derived from bisphenol (preferably bisphenol A) and/or derivatives thereof.

The bisphenol polycarbonate resin is preferably a bisphenol A polycarbonate resin.

The molecular weight of the polycarbonate resin is not particularly specified, but a viscosity average molecular weight converted from a solution viscosity usually measured at a temperature of 25°C using methylene chloride as a solvent is preferably 20,000 or more, more preferably 22,000 or more. The viscosity average molecular weight is preferably 35,000 or less, more preferably 32,000 or less, much more preferably 30,000 or less, or may be 28,000 or less, or 25,000 or less. By setting the viscosity average molecular weight to the lower limit or more, the strength of the resulting plate-shaped molded article can be increased. By setting the viscosity average molecular weight to the upper limit or less, the formability tends to be improved.

In this regard, the viscosity average molecular weight [Mv] means a value obtained by determining an intrinsic viscosity [$\eta$] (unit: dL/g) at a temperature of 25°C using methylene chloride as a solvent and using an Ubbelohde viscometer and then making calculation from the Schnell's viscosity equation, that is, $\eta = 1.23 \times 10^{-4} Mv^{0.83}$. Moreover, the intrinsic viscosity [$\eta$] is a value obtained by measuring a specific viscosity [$\eta_{sp}$] at each solution concentration [C] (g/dL) and then making calculation from the following equation.

$$\eta = \lim_{c \to 0} \eta_{sp} / \mathrm{c}$$

In the present embodiment, two or more polycarbonate resins different in viscosity average molecular weight may be mixed and used, and in this case, the viscosity average molecular weight is a viscosity average molecular weight of the mixture.

The glass transition onset temperature (Tg) of the polycarbonate resin for use in the present embodiment is preferably 160°C or lower, more preferably 155°C or lower, much more preferably 154°C or lower, even more preferably 153°C or lower, still more preferably 152°C or lower, still much more preferably 151°C or lower, or may be 150°C or lower, or 149°C or lower. The glass transition onset temperature (Tg) of the polycarbonate resin for use in the present embodiment is, for example, 140°C or higher, or may be 143°C or higher, 145°C or higher, 147°C or higher, 148°C or higher.

The glass transition temperature is measured in accordance with the description in paragraph 0056 of Japanese Patent Laid-Open No. 2022-080270.

In addition, regarding details of the polycarbonate resin, the description in paragraphs 0011 to 0020 of Japanese Patent Laid-Open No. 2012-144604 and the description in paragraphs 0014 to 0035 of Japanese Patent Laid-Open No. 2019-002023 can be considered without departing from the subject matter of the present embodiment, the contents of which are incorporated herein.

The content of the polycarbonate resin in the polycarbonate resin layer in the present embodiment is preferably 90% by mass or more, more preferably 92% by mass or more, much more preferably 94% by mass or more, even more preferably 96% by mass or more, still more preferably 97% by mass or more, or may be 98% by mass or more, in 100% by mass of the polycarbonate resin layer. The upper limit is an amount given when a component other than the sulfonic acid metal salt in the polycarbonate resin layer becomes a polycarbonate resin.

When the polycarbonate resin layer in the present embodiment contains two or more polycarbonate resins, the total amount thereof preferably falls within the above range.

The polycarbonate resin layer in the present embodiment contains a sulfonic acid metal salt. The sulfonic acid metal salt is a component generally used as a flame retardant for a polycarbonate resin.

The sulfonic acid metal salt is preferably an alkali metal salt. An alkali metal to constitute the alkali metal salt is preferably lithium, sodium, potassium, or rubidium, more preferably sodium or potassium. The sulfonic acid metal salt may contain a fluorine atom.

The molecular weight of the sulfonic acid metal salt for use in the present embodiment is preferably 100 to 900, more preferably 100 to 500.

Specific examples of the sulfonic acid metal salts for use in the present embodiment are shown below. It goes without saying that in the present embodiment, the sulfonic acid metal salt is not limited to these.

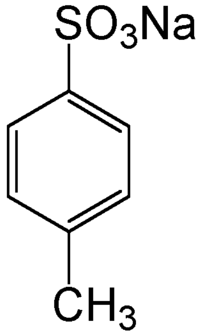

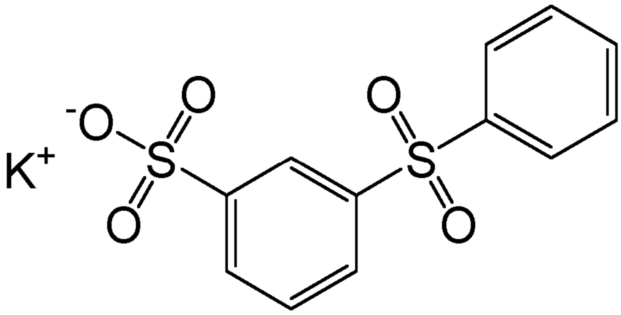

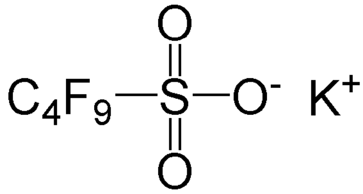

The content of the sulfonic acid metal salt in the polycarbonate resin layer is 0.01 to 0.80% by mass, preferably 0.7% by mass or less, more preferably 0.6% by mass or less, much more preferably 0.5% by mass or less, even more preferably 0.4% by mass or less, and depending on the intended use and the like, it may be less than 0.1% by mass, or 0.05% by mass or less. By using the sulfonic acid metal salt, excellent flame resistance can be achieved even if the amount of the flame retardant to be blended in the polycarbonate resin layer is reduced, and a multilayered article having excellent transparency and wet heat resistance is obtained.

The polycarbonate resin layer in the present embodiment may contain only one of the sulfonic acid metal salts, or may contain two or more thereof. When the polycarbonate resin layer contains two or more, the total amount thereof preferably falls within the above range.

The polycarbonate resin layer in the present embodiment may contain a flame retardant other than the sulfonic acid metal salt, or may not contain it. Examples of the flame retardants other than the sulfonic acid metal salt include a phosphorus-based flame retardant and a halogen-based flame retardant. As an example of the polycarbonate resin layer in the present embodiment, an embodiment in which a sulfonic acid metal salt and a phosphorus-based flame retardant are used in combination can be mentioned.

It is preferable that the polycarbonate resin layer in the present embodiment should not substantially contain a flame retardant other than the sulfonic acid metal salt. "Not substantially contain" means that the content of a flame retardant other than the sulfonic acid metal salt is 50% by mass or less of the total amount of flame retardants contained in the polycarbonate resin layer, and the content is preferably 10% by mass or less, more preferably 3% by mass or less, much more preferably 1% by mass or less.

The polycarbonate resin layer in the present embodiment may contain, in addition to the above components, an antioxidant, a mold release agent, an ultraviolet absorbent, a flame retardant promoter, a heat stabilizer, a colorant, an antistatic agent, a fluorescent brightener, an antifogging agent, a flow modifier, a plasticizer, a dispersant, an antibacterial agent, an anti-blocking agent, an impact modifier, a sliding modifier, a hue improver, an acid trapping agent, and the like. These components may be used singly, or may be used in combination of two or more. The total content of the above components is preferably 0 to 5% by mass, more preferably 0 to 3% by mass, much more preferably 0 to 1% by mass, even more preferably 0 to 0.5% by mass, still more preferably 0 to 0.3% by mass, still much more preferably 0 to 0.1% by mass, of the polycarbonate resin layer.

Examples of the antioxidants include a phenol-based antioxidant, an amine-based antioxidant, a phosphorus-based antioxidant, and a thioether-based antioxidant. Among these, a phosphorus-based antioxidant and a phenol-based antioxidant (more preferably a hindered phenol-based antioxidant) are preferable, and a phosphorus-based antioxidant is more preferable, in the present embodiment.

The phosphorus-based antioxidant is preferably a phosphite-based antioxidant, and a phosphite compound represented by the following formula (1) or (2) is preferable.

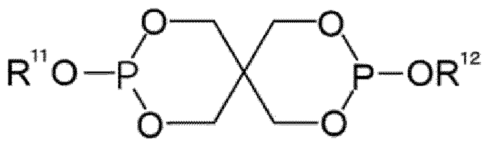

wherein $R^{11}$ and $R^{12}$ are each independently an alkyl group having 1 to 30 carbon atoms or an aryl group having 6 to 30 carbon atoms.

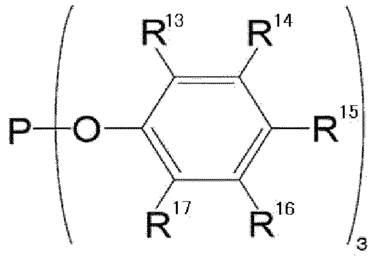

(2)

wherein $R^{13}$ to $R^{17}$ are each independently a hydrogen atom, an aryl group having 6 to 20 carbon atoms, or an alkyl group having 1 to 20 carbon atoms.

In the formula (1), the alkyl groups represented by $R^{11}$ and $R^{12}$ are each independently preferably a straight-chain or branched alkyl group having 1 to 10 carbon atoms. When $R^{11}$ and $R^{12}$ are aryl groups, they are each preferably an aryl group represented by any of the following formulae (1-a), (1-b), and (1-c). In the formulae, * represents a linkage position.

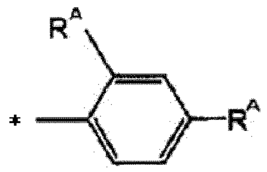

(1-a)

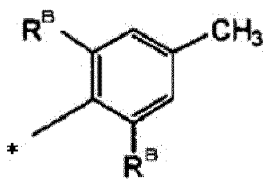

(1-b)

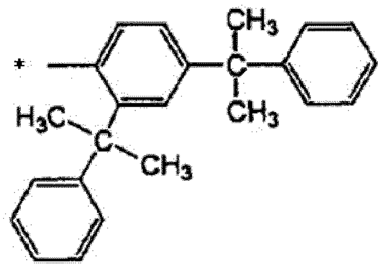

(1-c)

In the formula (1-a), $R^A$s each independently represent an alkyl group having 1 to 10 carbon atoms. In the formula (1-b), $R^B$s each independently represent an alkyl group having 1 to 10 carbon atoms.

Regarding the hindered phenol-based antioxidant, the description in paragraph 0063 of Japanese Patent Laid-Open No. 2018-090677 and the description in paragraph 0076 of Japanese Patent Laid-Open No. 2018-188496 can be referred to, the contents of which are incorporated herein.

Regarding the antioxidant, in addition to the above, the description in paragraphs 0057 to 0061 of Japanese Patent Laid-Open No. 2017-031313 can be considered, the contents of which are incorporated herein.

The content of the antioxidant is preferably 0.001 part by mass or more, more preferably 0.005 part by mass or more, much more preferably 0.010 part by mass or more, even more preferably 0.050 part by mass or more, based on 100 parts by mass of the polycarbonate resin layer. The upper limit of the content of the antioxidant is preferably 0.500 part by mass or less, more preferably 0.300 part by mass or less, much more preferably 0.200 part by mass or less, even more preferably 0.150 part by mass or less, still more preferably 0.100 part by mass or less, particularly preferably 0.080 part by mass or less, based on 100 parts by mass of the polycarbonate resin layer.

The antioxidants may be used singly, or may be used in combination of two or more. When two or more are used, the total amount thereof preferably falls within the above range.

Next, the mold release agent that can be contained in the polycarbonate resin layer will be described.

The type of the mold release agent is not particularly specified, but examples thereof include an aliphatic carboxylic acid, an ester of an aliphatic carboxylic acid and an alcohol, an aliphatic hydrocarbon compound having a number average molecular weight of 200 to 15,000, a polyether having a number average molecular weight of 100 to

5,000, and a polysiloxane-based silicone oil.

Regarding the details of the mold release agent, the description in paragraphs 0035 to 0039 of International Publication No. 2015/190162 can be considered, the contents of which are incorporated herein.

The content of the mold release agent is preferably 0.001 part by mass or more, more preferably 0.005 part by mass or more, much more preferably 0.010 part by mass or more, even more preferably 0.050 part by mass or more, based on 100 parts by mass of the polycarbonate resin layer. The upper limit is preferably 0.5 part by mass or less, more preferably 0.3 part by mass or less, much more preferably 0.1 part by mass or less.

The mold release agents may be used singly, or may be used in combination of two or more. When two or more are used, the total amount thereof preferably falls within the above range.

The thickness of the polycarbonate resin layer is preferably 50 μm or more, more preferably 100 μm or more, much more preferably 200 μm or more. By setting the thickness to the above lower limit or more, forming becomes easier, and the flame resistance tends to be improved. The upper limit of the thickness of the polycarbonate resin layer is preferably 1000 μm or less, more preferably 750 μm or less, much more preferably 500 μm or less.

<Acrylic resin layer>

The acrylic resin layer in the present embodiment has a thickness of 1 to 80 μm and contains an acrylic resin.

The thickness of the acrylic resin layer is preferably 1 μm or more, more preferably 3 μm or more, much more preferably 10 μm or more, even more preferably 20 μm or more, still more preferably 25 μm or more, still much more preferably 30 μm or more. By setting the thickness to the above lower limit or more, forming becomes easier, and the hardness tends to be improved. The upper limit of the thickness of the acrylic resin layer is 80 μm or less, preferably 70 μm or less, more preferably 60 μm or less, or may be 55 μm or less, 50 μm or less, 45 μm or less, or 40 μm or less, and depending on the intended use, it may be less than 10 μm. By decreasing the thickness of the acrylic resin layer as above, the flame resistance of the multilayered article can be improved.

The acrylic resin layer may be single-layered, or may be multilayered, but is preferably single-layered.

The acrylic resin layer in the present embodiment contains an acrylic resin, as described above.

An example of the acrylic resin is preferably a polymer containing alkyl (meth)acrylate units (preferably alkyl methacrylate units, or alkyl (meth)acrylate units in which the number of carbon atoms of the alkyl group is 1 to 3, more preferably alkyl methacrylate units in which the number of carbon atoms of the alkyl group is 1 to 3) in amounts of 50% by mass or more (preferably 90% by mass or more, more preferably 95% by mass or more) of all constitutional units, and is more preferably a polymer containing methyl (meth)acrylate units (preferably methyl methacrylate units) in amounts of 50% by mass or more (preferably 90% by mass or more) of all constitutional units. Examples of constitutional units other than the alkyl (meth)acrylate units include other (meth)acrylate units, styrene units, cyclic acid anhydride units, N-substituted maleimide units, and lactone ring units.

When the acrylic resin layer in the present embodiment is multilayered (when it is constituted of two or more layers), all the acrylic resin layers preferably contain the above acrylic resin.

The acrylic resin layer may be composed of an acrylic resin only, or may contain another thermoplastic resin in addition to the acrylic resin.

The acrylic resin layer more preferably contains, as another thermoplastic resin, at least one thermoplastic resin selected from a styrene resin, a fluorine resin such as polyvinylidene fluoride, and an aromatic polyether resin such as polyphenylene ether, and much more preferably contains a styrene resin.

An example of the acrylic resin layer is a layer 90% by mass or more (preferably 95% by mass or more, more preferably 97% by mass or more, much more preferably 98% by mass or more) of which is composed of the acrylic resin.

Another example of the acrylic resin is a layer 90% by mass or more (preferably 95% by mass or more, more preferably 97% by mass or more, much more preferably 98% by mass or more) of which is composed of the acrylic resin and another thermoplastic resin (preferably styrene resin).

The weight average molecular weight of the acrylic resin is not particularly specified, but is preferably 10,000 or more, more preferably 30,000 or more, much more preferably 50,000 or more, even more preferably 60,000 or more, still more preferably 70,000 or more. The weight average molecular weight of the acrylic resin is preferably 250,000 or less, more preferably 200,000 or less, much more preferably 150,000 or less, even more preferably 100,000 or less, still more preferably 90,000 or less.

The glass transition temperature of the acrylic resin layer for use in the present embodiment is preferably 80°C or higher, more preferably 90°C or higher, much more preferably 95°C or higher, even more preferably 100°C or higher, still more preferably 105°C or higher. The upper limit is not particularly specified, but for example, it is practically 200°C or lower.

The glass transition temperature is measured in accordance with the description in paragraph 0056 of Japanese Patent Laid-Open No. 2022-080270.

The acrylic resin layer may contain, in addition to the above components, inorganic particles, an antioxidant, a

mold release agent, an ultraviolet absorbent, a heat stabilizer, a flame retardant, a flame retardant promoter, a colorant, an antistatic agent, a fluorescent brightener, an antifogging agent, a flow modifier, a plasticizer, a dispersant, an antibacterial agent, an anti-blocking agent, an impact modifier, a sliding modifier, a hue improver, an acid trapping agent, and the like. These components may be used singly, or may be used in combination of two or more. When the above components are contained, the total content is preferably 0.1 to 5% by mass of the acrylic resin layer.

As described above, the acrylic resin layer in the present embodiment may contain a flame retardant. The flame retardant that may be contained in the acrylic resin layer is, for example, a phosphorus-based flame retardant.

Examples of the phosphorus-based flame retardants include an aromatic phosphoric ester compound, a phosphaphenanthrene compound, a phosphinic acid metal salt, ammonium polyphosphate, melamine polyphosphate, a phosphoric ester amide, and red phosphorus, and preferable are an aromatic phosphoric ester compound and a phosphaphenanthrene compound.

Examples of the aromatic phosphoric ester compounds include resorcinol diphenyl phosphate, hydroquinone diphenyl phosphate, bisphenol A diphenyl phosphate, and biphenyl diphenyl phosphate. Examples of commercially available products thereof include PX-202, CR-741, PX-200 and PX-201 manufactured by Daihachi Chemical Industry Co., Ltd., and FP-500, FP-600, FP-700 and PFR manufactured by ADEKA CORPORATION.

The phosphaphenanthrene compound is a phosphorus-based flame retardant having at least one phosphaphenanthrene backbone in a molecule, and examples of commercially available products thereof include HCA, HCA-HQ, BCA, SANKO-220 and M-Ester manufactured by Sanko Co., Ltd.

The phosphinic acid metal salts are phosphinates and/or diphosphinates and/or polymers thereof. Examples of the salts include salts of calcium, aluminum, and zinc. Examples of commercially available products of the phosphinic acid metal salts include "Exolit" (R) OP1230 and OP1240 manufactured by Clariant Japan K.K.

The phosphoric ester amide is an aromatic amide-based flame retardant containing a phosphorus atom and a nitrogen atom. Examples of commercially available products of the phosphoric ester amide include SP-703 manufactured by SHIKOKU CHEMICALS CORPORATION.

Examples of the ammonium polyphosphates include ammonium polyphosphate, melamine-modified ammonium polyphosphate, and ammonium carbamoyl polyphosphate. Examples of the aforementioned melamine polyphosphates include melamine phosphate, melamine pyrophosphate, and melamine polyphosphates such as phosphates with melamine, melam and melem. Preferably used are MPP-A manufactured by Sanwa Chemical Co., Ltd., and PMP-100 and PMP-200 manufactured by Nissan Chemical Corporation.

When the acrylic resin layer contains a flame retardant, the content thereof is preferably 1 part by mass or more, more preferably 2 parts by mass or more, much more preferably 5 parts by mass or more, even more preferably 7 parts by mass or more, based on 100 parts by mass of the acrylic resin layer. The upper limit of the content of the flame retardant is preferably 25 parts by mass or less, more preferably 20 parts by mass or less, much more preferably 15 parts by mass or less, based on 100 parts by mass of the acrylic resin layer.

The acrylic resin layer may contain only one flame retardant, or may contain two or more. When two or more are contained, the total amount thereof preferably falls within the above range.

The multilayered article of the present embodiment may have constitution in which the acrylic resin layer does not substantially contain a flame retardant. "Not substantially contain" means that the content of the flame retardant in the acrylic resin layer is less than 1 part by mass based on 100 parts by mass of the acrylic resin layer, and the content is preferably 0.1 part by mass or less, much more preferably 0.01 part by mass or less. The present embodiment is highly valuable in that even if a flame retardant is not substantially blended in the flammable acrylic resin layer, flame resistance can be achieved in the present embodiment. Moreover, if the content of the flame retardant in the acrylic resin layer is small, roll staining during production can be effectively suppressed.

Furthermore, the multilayered article of the present embodiment preferably has constitution in which the acrylic resin layer does not substantially contain a flame retardant when the thickness of the acrylic resin layer is, for example, less than 20 μm, or less than 10 μm, particularly 8 μm or less.

<Multilayered article>

The multilayered article of the present embodiment has a polycarbonate resin layer and an acrylic resin layer, as described above.

The thickness (total thickness) of the multilayered article is not particularly limited, but is preferably 30 μm or more, more preferably 100 μm or more. The thickness of the multilayered article is preferably 10,000 μm or less, more preferably 5,000 μm or less, much more preferably 2,000 μm or less, or may be 1,000 μm or less, or 500 μm or less.

The multilayered article of the present embodiment preferably has a high (hard) pencil hardness. The pencil hardness measured from the acrylic resin layer side is preferably F or harder, more preferably H or harder. The upper limit is not particularly specified, but is practically 3H or lower.

The multilayered article of the present embodiment preferably has excellent transparency. Specifically, the haze

of the multilayered article is 20% or less, preferably 10% or less, more preferably 5% or less, much more preferably 3% or less, even more preferably 2% or less, still more preferably 1.5% or less, still much more preferably 1% or less, particularly preferably 0.8% or less, or may be 0.5% or less. The lower limit is preferably 0% or more, but is practically more than 0%.

The multilayered article of the present embodiment preferably has excellent flame resistance. Specifically, the multilayered article preferably satisfies the evaluation C (burning up to the standard line B, but the burning rate is 102 mm/min or less) in the FMVSS test, more preferably satisfies the evaluation B (self-extinguishing within burning distance of 51 mm (and within 60 seconds) from the standard line A) in the FMVSS test, and much more preferably satisfies the evaluation A (test piece does not ignite or self-extinguishes before the standard line A).

The pencil hardness, the haze and the FMVSS test are measured in accordance with the description in Examples described later.

The multilayered article of the present embodiment may include a hard coat layer. The multilayered article preferably has a hard coat layer on at least one surface of the multilayered article. The hard coat layer may be an outermost layer of the multilayered article. By providing a hard coat layer, the surface hardness of the multilayered article tends to be further improved. In the multilayered article of the present embodiment, the polycarbonate resin layer, the acrylic resin layer, and the hard coat layer are preferably laminated in this order. In the multilayered article of the present embodiment, the hard coat layer is preferably provided on the surface of the acrylic resin layer. By providing the hard coat layer on the surface of the acrylic resin layer, the coating property of the hard coat layer can be further improved.

Figure 1 is a schematic diagram showing an example of the multilayered article of the present embodiment, and as previously described, numeral 1 designates a multilayered article, numeral 2 designates a polycarbonate resin layer, numeral 3 designates an acrylic resin layer, and numeral 4 designates a hard coat layer. As long as the polycarbonate resin layer 2, the acrylic resin layer 3, and the hard coat layer 4 are laminated in the above order, the multilayered article may have other layers without departing from the subject matter of the present embodiment, but it is preferable that the multilayered article should not have other layers, that is, the above layers are next to each other.

The hard coat layer that may be included in the multilayered article of the present embodiment is a layer having a higher surface hardness than the polycarbonate resin layer. By including such a hard coat layer, the multilayered article or a formed article can be enhanced in surface hardness. Moreover, by including a hard coat layer having a higher surface hardness, the flame resistance tends to be further improved.

The thickness of the hard coat layer is preferably 0.5 μm or more, more preferably 1 μm or more, much more preferably 2 μm or more, even more preferably 2.5 μm or more, still more preferably 3 μm or more. By setting the thickness to the above lower limit or more, the pencil hardness of the whole multilayered article due to the hard coat layer tends to be further improved. The upper limit of the thickness of the hard coat layer is preferably 20 μm or less, more preferably 15 μm or less, much more preferably 12 μm or less, even more preferably 10 μm or less, still more preferably 8 μm or less, or may be 5 μm or less. By setting the thickness to the upper limit or less, the flame resistance tends to be further improved.

The hard coat layer is preferably one obtained by applying a hard coat material capable of being thermoset or cured by active energy rays and then curing the material.

An example of a paint to be cured by using active energy rays is a resin composition composed of one or more monofunctional or polyfunctional (preferably bi- to decafunctional) (meth)acrylates or oligomers, and is preferably a resin composition containing a monofunctional or polyfunctional (preferably bi- to decafunctional) urethane (meth)acrylate oligomer, or the like. To these resin compositions, a photopolymerization initiator is preferably added as a curing catalyst.

Examples of the thermosetting resin paints include polyorganosiloxane-based ones and crosslinked acrylic ones. Some of such resin compositions are commercially available as acrylic resins or hard coat agents for polycarbonate resin films or sheets, and they are appropriately selected considering suitability with the coating line.

Regarding the hard coat layer, the description in paragraphs 0045 to 0055 of Japanese Patent Laid-Open No. 2013-020130, the description in paragraphs 0073 to 0076 of Japanese Patent Laid-Open No. 2018-103518, and the description in paragraphs 0062 to 0082 of Japanese Patent Laid-Open No. 2017-213771 can be considered, the contents of which are incorporated herein.

The hard coat layer may contain, in addition to the above components, inorganic particles, an organic pigment, an ultraviolet absorbent, a light stabilizer, a heat stabilizer, a flame retardant, a flame retardant promoter, a colorant, an antistatic agent, a fluorescent brightener, an antifogging agent, a flow modifier, a plasticizer, a dispersant, an antibacterial agent, an anti-blocking agent, an impact modifier, a sliding modifier, a hue improver, an acid trapping agent, and the like. These components may be used singly, or may be used in combination of two or more.

Preferred examples of the inorganic particles include nanoparticles composed of a metal or a metal compound. Examples thereof include gold, silver, copper, platinum, palladium, nickel, cobalt, iron, manganese, silicon, titanium, zirconium, tungsten, molybdenum, chromium, zinc, aluminum, and composite metals composed of two or more of these. Preferred examples of the metal compounds include metal oxides, such as iron oxide, silicon oxide, zirconium oxide, vanadium oxide, niobium oxide, tantalum oxide, chromium oxide, molybdenum oxide, tungsten oxide, cobalt oxide, nickel oxide, cerium oxide, cupric oxide, zinc oxide, tin oxide, antimony oxide, titanium dioxide, aluminum oxide, indium tin oxide (ITO), cesium tungsten oxide (CWO), and mixtures thereof, metal carbides, metal borides, metal carbonates, zeolite, clay,

and composite materials of these.

Examples of the flame retardants include halogen-based flame retardants and phosphorus-base flame retardants. Examples of the phosphorus-based flame retardants include an aromatic phosphoric ester compound, a phosphaphenanthrene compound, a phosphinic acid metal salt, ammonium polyphosphate, melamine polyphosphate, a phosphoric ester amide, and red phosphorus. Regarding the flame retardant, the description in paragraphs 0054 to 0082 of Japanese Patent Laid-Open No. 2022-104214, and the description in paragraphs 0052 to 0077 of Japanese Patent No. 7021724 can be considered, the contents of which are incorporated herein.

The multilayered article of the present embodiment may have a near infrared cutting layer. The near infrared cutting layer is preferably a layer containing a near infrared absorbent. As an example of the infrared cutting layer, an embodiment in which a near infrared absorbent (e.g., cesium tungsten oxide (CWO)) is blended in the hard coat layer can be mentioned. By the hard coat layer containing a near infrared absorbent, the multilayered article can cut near infrared rays, and can be more preferably used as a dustproof cover for a head-up display.

The multilayered article of the present embodiment may have, in addition to the above, other layers. Specific examples thereof include an adhesion bonding layer, an adhesive layer, and an anti-fouling layer.

On at least one surface of the multilayered article, one or more of anti-fingerprint treatment, anti-glare treatment, weather resistant treatment, antistatic treatment, anti-fouling treatment, and anti-blocking treatment may have been carried out. In this case, an example of the outermost layer of the multilayered article is a hard coat layer. The anti-blocking treatment refers to treatment by which even films that have been brought into close contact with each other can be easily peeled off from each other, and examples of such treatment include addition of an anti-blocking agent and provision of asperities on the surface of the multilayered article.

The multilayered article of the present embodiment can be formed by using a main extruder for extruding a composition for forming a polycarbonate resin layer and a sub-extruder for extruding a composition for forming an acrylic resin layer, melting the resins under the conditions for the respective resins, extruding them to lead them to a die, and laminating them to form a sheet in the die, or forming sheets and then laminating them.

The multilayered article of the present embodiment may be used as it is, or may be subjected to processing, particularly thermal processing, to prepare a formed article.

The formed article of the present embodiment is a formed article formed from the multilayered article of the present embodiment.

<Uses>

The multilayered article or the formed article of the present embodiment can be preferably used for optical parts, design products, anti-reflection formed articles, and the like.

The multilayered article of the present embodiment is preferably used for display devices, electrical and electronic equipment, OA equipment, personal digital assistants, machine parts, household appliances, vehicle parts, various containers, parts of lighting equipment or the like, etc. Among these, it is particularly preferably used for housings of various displays, electrical and electronic equipment, OA equipment, personal digital assistants and household appliances, lighting equipment and vehicle parts (particularly vehicle interior parts), surface films of smartphones, touch panels and the like, optical materials, and optical disks. Especially, the multilayered article of the present embodiment is preferably used as a dustproof cover for a head-up display.

[Examples]

Hereinafter, the present invention will be more specifically described with reference to examples. The materials, the amounts used, the proportions, the processing contents, the processing procedure, etc. shown in the following examples can be appropriately modified as long as not departing from the subject matter of the present invention. Therefore, the scope of the present invention is not limited to the specific examples shown below.

When measuring equipment and the like used in the examples are difficult to obtain because of product discontinuation or the like, other equipment having equivalent performance can be used for the measurement.

1. Materials

- Polycarbonate resin

E-2000F: polycarbonate resin obtained by interfacial polymerization using bisphenol A as a starting material (manufactured by Mitsubishi Gas Chemical Company, Inc., E-2000F, viscosity average molecular weight: 27,000, Tg: 150°C)

S-3000F: polycarbonate resin obtained by interfacial polymerization using bisphenol A as a starting material

(manufactured by Mitsubishi Gas Chemical Company, Inc., S-3000F, viscosity average molecular weight: 21,000, Tg: 147°C)
- Sulfonic acid metal salt
KSS-FR: manufactured by Arichem Limited, KSS-FR, potassium diphenyl sulfone-3-sulfonate
NATS: manufactured by Tokyo Chemical Industry Co., Ltd., NATS, sodium p-toluenesulfonate
F-114P: manufactured by DIC Corporation, F-114P, potassium perfluorobutanesulfonate
- phosphorus-based flame retardant
PX-200: manufactured by Daihachi Chemical Industry Co., Ltd., compound described below

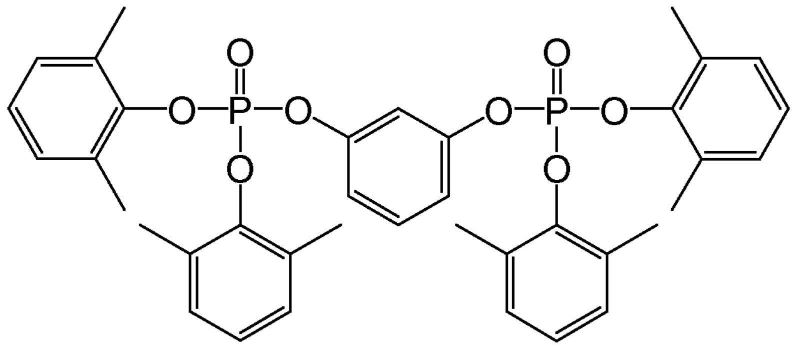

- Antioxidant
  2112: tris(2,4-di-tert-butylphenyl)phosphite (phosphorus-based antioxidant, ADK STAB 2112 manufactured by ADEKA CORPORATION)
- Mold release agent
  S-100A: glycerol monostearate (RIKEMAL S-100A manufactured by Riken Vitamin Co., Ltd.)
- Acrylic resin
  PMMA: polymethyl methacrylate, manufactured by Asahi Kasei Corp., DELPET 80HD
- Flame retardant
  BCA: manufactured by Sanko Co., Ltd., compound described below

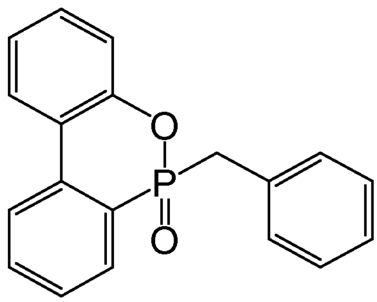

2. Examples 1 to 10, Comparative Examples 1 to 10

<Production of resin composition (pellets)>

A resin composition (pellets) for forming a polycarbonate resin layer and a resin composition (pellets) for forming an acrylic resin layer were produced in accordance with the following methods.

The components described above were measured so as to obtain the additive amounts described in Table 1 or Table 2 (the amount of each component in Table 1 and Table 2 is expressed in % by mass). Thereafter, they were mixed with a tumbler for 15 minutes, then melt kneaded by a vented twin screw extruder ("TEX30$\alpha$" manufactured by The Japan Steel works, Ltd.) having a screw diameter of 32 mm, and subjected to strand cutting to obtain pellets. For the resin composition (pellets) for forming a polycarbonate resin layer, melt kneading was carried out while timely changing the temperature between 260 to 300°C depending on the resin viscosity, and for the resin composition (pellets) for forming an acrylic resin layer, melt kneading was carried out at 260°C.

<Production of multilayered article>

Using a single screw extruder having a shaft diameter of 32 mm, a single screw extruder having a shaft diameter of 65 mm, and a multilayer extruder having a feed block connected to all the extruders and a T-die having a width of 650 mm connected to the feed block, a multilayered article was formed. Into a single screw extruder having a shaft diameter of 32 mm, the resin composition (pellets) for use in the formation of an acrylic resin layer of each of examples and comparative examples shown in Table 1 or Table 2 was introduced, and it was extruded under the conditions of a cylinder temperature of 240°C and a discharge rate of 0.3 to 6.4 kg/h. Further, into a single screw extruder having a shaft diameter of 65 mm, the resin composition (pellets) for use in the formation of a polycarbonate resin layer of each of examples and comparative examples shown in Table 1 or Table 2 was continuously introduced, and it was extruded at a discharge rate of 17.4 to 23.5 kg/h while timely changing the cylinder temperature to 250 to 290°C depending on the resin viscosity. The feed block connected to all the extruders had distribution pins of two types and two layers, and compositions were extruded and laminated. By means of a T-die connected beyond that, the compositions were extruded into sheets, and the sheets were cooled while transferring a mirror surface thereon with three mirror finish rolls set at temperatures of 120°C, 120°C, and 140°C from the upstream side, thereby obtaining each multilayered article.

The rolls used in the production were visually observed to confirm the presence or absence of roll staining. In the confirmation, evaluation was made by 5 experts, and judgement was made by majority vote. The result is shown as roll staining in the table below.

<Pencil hardness>

Regarding the acrylic resin layer side surface of the multilayered article prepared above, the pencil hardness was determined by measuring pencil hardness using a pencil hardness tester under a load of 750 g in accordance with JIS K5600-5-4:1999. Evaluation was made by 5 Experts, and judgement was made by majority vote.

<FMVSS Test>

Regarding the multilayered article obtained above, a test piece (350 mm × 100 mm × 0.375 mm) was contacted with burner flame of 38 mm for 15 seconds from the right edge of the test piece using a FMVSS No 302 flammability tester, and a burning rate in the burning distance of 254 mm as a gauge length was measured. Measurement was carried out by a test jig without wire, and the result was evaluated as follows.

A: The test piece does not ignite or self-extinguishes before the standard line A
B: The test piece self-extinguishes within a burning distance of 51 mm (and within 60 seconds) from the standard line A
C: The test piece burns up to the standard line B, but the burning rate is 102 mm/min or less
D: The test piece burns up to the standard line B, and the burning rate is faster than 102 mm/min

<Haze>

Haze (unit: %) of the multilayered article obtained was measured under the conditions of a 10° visual field of D65 light source. In the measurement, a haze meter ("HM-150" manufactured by Murakami Color Research Laboratory) was used.

Comparative Example 11

<Production of resin composition (pellets)>

A resin composition (pellets) for forming a polycarbonate resin layer was produced in the same manner as in Example 1.

<Production of multilayered article>

Using a T-die melt extruder including a vented twin-screw extruder TEX30α (manufactured by The Japan Steel works, Ltd.) having a barrel diameter of 32 mm and a screw L/D of 31.5, the resin composition (pellets) for use in the formation of a polycarbonate resin layer was continuously introduced under the conditions of a cylinder temperature of 280°C, and extruded. At this stage, the discharge rate of the pellets was controlled so that the thickness of the polycarbonate layer became 375 μm. By means of a T-die connected to the extruder, the composition was extruded into sheets, and the sheets were cooled while transferring a mirror surface thereon with three mirror finish rolls set at

temperatures of 120°C, 120°C, and 140°C from the upstream side, thereby obtaining a multilayered article.

The multilayered article obtained was evaluated in the same manner as in Example 1.

[Table 1]

| | | | Example | | | | | | | | | |
|---|---|---|---|---|---|---|---|---|---|---|---|---|
| | Component | | 1 | 2 | 3 | 4 | 5 | 6 | 7 | 8 | 9 | 10 |
| PC layer | Polycarbonate | E2000F | 99.93 | 99.86 | 99.66 | 99.66 | 99.93 | 99.86 | 99.86 | 99.93 | 99.93 | 99.93 |
| | Sulfonic acid metal salt | KSS-FR | 0.03 | 0.1 | 0.3 | 0.3 | | | | 0.03 | 0.03 | 0.03 |
| | | NATS | | | | | 0.03 | 0.1 | | | | |
| | | F-114P | | | | | | | 0.1 | | | |
| | Phosphorus-based flame retardant | PX-200 | | | | | | | | | | |
| | Antioxidant | 2112 | 0.03 | 0.03 | 0.03 | 0.03 | 0.03 | 0.03 | 0.03 | 0.03 | 0.03 | 0.03 |
| | Mold release agent | S-100A | 0.01 | 0.01 | 0.01 | 0.01 | 0.01 | 0.01 | 0.01 | 0.01 | 0.01 | 0.01 |
| Acrylic layer | PMMA | 80HD | 100 | 100 | 100 | 100 | 100 | 100 | 100 | 90 | 90 | 100 |
| | Flame retardant | PX-200 | | | | | | | | 10 | | |
| | | BCA | | | | | | | | | 10 | |
| PC layer thickness (μm) | | | 340 | 340 | 340 | 320 | 340 | 340 | 340 | 320 | 320 | 370 |
| Acrylic layer thickness (μm) | | | 35 | 35 | 35 | 55 | 35 | 35 | 35 | 55 | 55 | 5 |
| Multilayered film evaluation results | | FMVSS | C | B | B | B | C | B | B | A | B | A |
| | | Haze | 0.2 | 0.2 | 0.3 | 0.3 | 0.7 | 2.3 | 0.1 | 0.2 | 0.2 | 0.2 |
| | | Roll staining | no | no | no | no | no | no | no | yes | yes | no |
| | | Pencil hardness | H | H | H | H | H | H | H | H | H | HB |

[Table 2]

| | | | Comparative Example | | | | | | | | | | |
|---|---|---|---|---|---|---|---|---|---|---|---|---|---|
| | Component | | 1 | 2 | 3 | 4 | 5 | 6 | 7 | 8 | 9 | 10 | 11 |
| PC layer | Polycarbonate | E2000F | 99.96 | 98.96 | 98.96 | 99.93 | 99.96 | 99.96 | 99.96 | 99.96 | 99.86 | 99.86 | 99.93 |
| | Sulfonic acid metal salt | KSS-FR | | | | 0.03 | | | | | | | 0.03 |
| | | NATS | | 1 | | | | | | | | | |
| | | F-114P | | | 1 | | | | | | | | |
| | Phosphorus-based flame retardant | PX-200 | | | | | | | | | 0.1 | 0.1 | |
| | Antioxidant | 2112 | 0.03 | 0.03 | 0.03 | 0.03 | 0.03 | 0.03 | 0.03 | 0.03 | 0.03 | 0.03 | 0.03 |
| | Mold release agent | S-100A | 0.01 | 0.01 | 0.01 | 0.01 | 0.01 | 0.01 | 0.01 | 0.01 | 0.01 | 0.01 | 0.01 |
| Acrylic layer | PMMA | 80HD | 100 | 100 | 100 | 100 | 100 | 100 | 100 | 100 | 100 | 100 | 0 |
| | Flame retardant | PX-200 | | | | | | | 10 | | | | |
| | | BCA | | | | | | | | 10 | | 10 | |
| PC layer thickness (μm) | | | 340 | 340 | 340 | 275 | 365 | 275 | 340 | 340 | 340 | 340 | 375 |
| Acrylic layer thickness (μm) | | | 35 | 35 | 35 | 100 | 10 | 100 | 35 | 35 | 35 | 35 | 0 |
| Multilayered film evaluation results | | FMVSS | D | A | A | D | D | D | D | D | D | D | A |
| | | Haze | 0.2 | 39.6 | 96 | 0.2 | 0.2 | 0.2 | 0.2 | 0.2 | 0.2 | 0.2 | 0.2 |
| | | Roll staining | no | no | no | no | no | no | yes | yes | no | yes | no |
| | | Pencil hardness | H | H | H | H | HB | H | H | H | H | H | 2B |

Examples 11 to 13

<Liquid preparation for hard coat A>

96 Parts by mass of Nopcocure FC950 (urethane acrylate, solid content concentration: 50% by mass, manufactured by San Nopco Limited), 2 parts by mass of Esacure One (photopolymerization initiator, manufactured by IGM Resins B.V.), and 2 parts by mass of RS-75A (fluorine-based leveling agent, solid content concentration: 20% by mass, manufactured by DIC Corporation) were mixed, and then the mixture was diluted with propylene glycol monoethyl ether so that the solid content concentration became 25% by mass, thereby obtaining a mixed liquid.

<Liquid preparation for hard coat B>

HO3313U-10 (urethane acrylate, solid content concentration: 52.6% by mass, manufactured by Fujikura Kasei Co., Ltd.) was diluted with propylene glycol monoethyl ether so that the solid content concertation became 26.3% by mass, thereby obtaining a mixed liquid.

<Formation of hard coat layer>

A multilayered article as shown in Table 3 was produced in accordance with Example 1 described above. On the acrylic resin layer side of the multilayered article, the mixed liquid obtained in the above liquid preparation for hard coat was applied with a bar coater so that the dry film thickness became 3 μm, and dried in an oven at 80°C for 2 minutes. Thereafter, using an ultraviolet ray irradiator manufactured by Heraeus Group, ultraviolet curing was carried out so that the integrated light volume became 200 mJ in a nitrogen atmosphere, thereby obtaining a multilayered article. The thickness of the hard coat layer was 3 μm.

The FMVSS test, and measurement of pencil hardness and haze were carried out in the same manner as in Example 1. A pencil hardness on the side where the hard coat layer had been provided was measured.

<Appearance of hard coat layer>

The presence or absence of appearance defects of the film after the hard coat application was also evaluated. The appearance defects of the hard coat layer were visually observed. In the confirmation, evaluation was made by 5 experts, judgement was made by majority vote, and the evaluation was made as follows.

A: There were no appearance defects

B: There were appearance defects

Comparative Example 12

<Formation of hard coat layer>

A multilayered article as shown in Table 3 was produced in accordance with Comparative Example 11 described above. On the surface of the polycarbonate resin layer, the mixed liquid obtained in the above liquid preparation for hard coat was applied with a bar coater so that the dry film thickness became 3 μm, and dried in an oven at 80°C for 2 minutes. Thereafter, using an ultraviolet ray irradiator manufactured by Heraeus Group, ultraviolet curing was carried out so that the integrated light volume became 200 mJ in a nitrogen atmosphere, thereby obtaining a multilayered article. The thickness of the hard coat layer was 3 μm.

The resulting multilayered article was evaluated in the same manner as in Example 11.

[Table 3]

| | | | Example | | | Comparative Example |
|---|---|---|---|---|---|---|
| | Component | | 11 | 12 | 13 | 12 |
| PC layer | Polycarbonate | E2000F | 99.86 | 99.86 | 99.93 | 99.93 |
| | Sulfonic acid metal salt | KSS-FR | | | 0.03 | 0.03 |
| | | NATS | 0.1 | | | |
| | | F-114P | | 0.1 | | |
| | Phosphorus-based flame retardant | PX-200 | | | | |
| | Antioxidant | 2112 | 0.03 | 0.03 | 0.03 | 0.03 |
| | Mold release agent | S-100A | 0.01 | 0.01 | 0.01 | 0.01 |
| Acrylic layer | PMMA | 80HD | 100 | 100 | 100 | 0 |
| | Flame retardant | PX-200 | | | | |
| Hard coat layer | Hard coat A | | 100 | 100 | | |
| | Hard coat B | | | | 100 | 100 |
| PC layer thickness (μm) | | | 340 | 340 | 370 | 375 |
| Acrylic layer thickness (μm) | | | 55 | 55 | 5 | 0 |
| HC layer thickness (μm) | | | 3 | 3 | 3 | 3 |
| Multilayered film evaluation results | | FMVSS | C | C | A | A |
| | | Haze | 2.3 | 0.1 | 0.2 | 0.2 |
| | | Roll staining | no | no | no | no |
| | | Pencil hardness | 3H | 3H | H | HB |
| | | Appearance after HC application | A | A | A | B |

Example 14

The procedure was carried out in the same manner as in Example 1 except for making changes as shown in Table 4.

Example 15

The procedure was carried out in the same manner as in Example 13 except for making changes as shown in Table 4.

Table 4

| | | | Example 14 | Example 15 |
|---|---|---|---|---|
| | Component | | 14 | 15 |
| PC layer | Polycarbonate resin | E2000F | 33.31 | 33.31 |
| | | S3000F | 66.62 | 66.62 |
| | Sulfonic acid metal salt | KSS-FR | 0.03 | 0.03 |
| | | NATS | | |
| | | F-114P | | |
| | Phosphorus-based flame retardant | PX-200 | | |
| | Antioxidant | 2112 | 0.03 | 0.03 |
| | Mold release agent | S-100A | 0.01 | 0.01 |
| Acrylic resin layer | PMMA | 80HD | 100 | 100 |
| | Flame retardant | BCA | | |
| | | PX-200 | | |
| Hard coat layer | | | No | Hard coat B |
| PC layer thickness (μm) | | | 340 | 340 |
| Acrylic layer thickness (μm) | | | 35 | 35 |
| HC layer thickness (μm) | | | no | 3 |
| Multilayered film evaluation results | | FMVSS | C | B |
| | | Haze | 0.2 | 0.2 |
| | | Roll staining | no | no |
| | | Pencil hardness | H | 3H |
| | | Appearance after HC application | - | A |

In Table 1 to Table 4 described above, PC layer means a polycarbonate resin layer, and in Table 3 and Table 4, HC layer means a hard coat layer.

As is clear from the above results, the multilayered article of the present embodiment was excellent in flame resistance and transparency. Moreover, the pencil hardness was also high.

[Reference Signs List]

1: multilayered article
2: polycarbonate resin layer
3: acrylic resin layer
4: hard coat layer

## Claims

**1.** A multilayered article having

a polycarbonate resin layer comprising a polycarbonate resin and a sulfonic acid metal salt, and
an acrylic resin layer having a thickness of 1 to 80 μm and comprising an acrylic resin,
a content of the sulfonic acid metal salt in the polycarbonate resin layer being 0.01 to 0.80% by mass, wherein
a haze of the multilayered article is 20% or less.

2. The multilayered article according to claim 1, wherein the haze of the multilayered article is 10% or less.

3. The multilayered article according to claim 1 or 2, wherein the acrylic resin layer has a thickness of 10 to 80 μm.

4. The multilayered article according to any one of claims 1 to 3, wherein the pencil hardness of the multilayered article, as measured from the acrylic resin layer side, is F or harder.

5. The multilayered article according to any one of claims 1 to 4, wherein the acrylic resin layer of the multilayered article contains a flame retardant.

6. The multilayered article according to claim 1 or 2, wherein the acrylic resin layer has a thickness of 1 to 10 μm.

7. The multilayered article according to claim 6, wherein the acrylic resin layer of the multilayered article does not substantially contain a flame retardant.

8. The multilayered article according to any one of claims 1 to 7, further having one or more hard coat layer.

9. A dustproof cover for a head-up display, comprising the multilayered article according to any one of claims 1 to 8.

Fig. 1

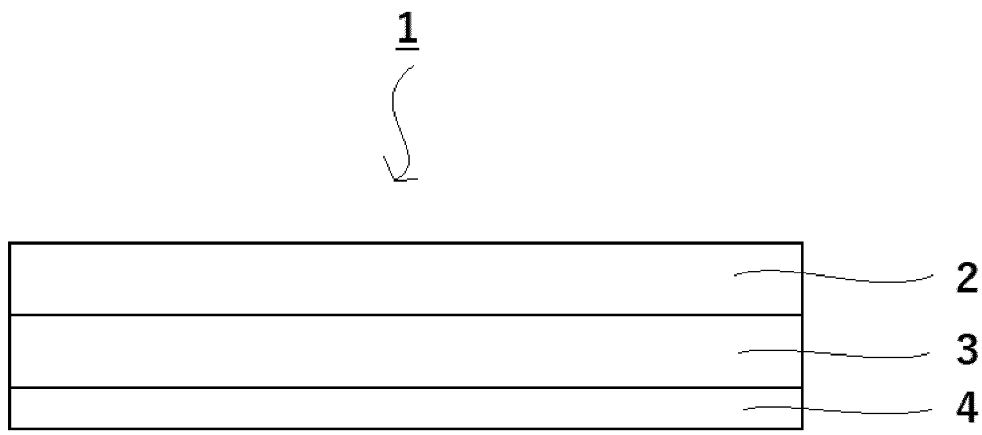

**INTERNATIONAL SEARCH REPORT**

International application No. **PCT/JP2023/040330**

**A. CLASSIFICATION OF SUBJECT MATTER**

***B32B 27/36***(2006.01)i; ***B32B 7/023***(2019.01)i; ***B32B 27/30***(2006.01)i; ***G02B 27/01***(2006.01)i
FI: B32B27/36 102; B32B7/023; B32B27/30 A; G02B27/01

According to International Patent Classification (IPC) or to both national classification and IPC

**B. FIELDS SEARCHED**

Minimum documentation searched (classification system followed by classification symbols)

B32B1/00-43/00; G02B27/01

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>Y | JP 2011-194733 A (TEIJIN CHEMICALS LTD) 06 October 2011 (2011-10-06)<br>claims 1-4, paragraphs [0002], [0012], [0032]-[0054], [0098]-[0099], examples 1-9 | 1-8<br>1-9 |
| Y | WO 2016/060100 A1 (MITSUBISHI GAS CHEMICAL CO et al.) 21 April 2016 (2016-04-21)<br>claims 1-11, paragraphs [0003], [0009], [0035], [0042]-[0045], [0082]-[0088], [0097], examples 1-11 | 1-9 |
| Y | JP 2018-131495 A (MITSUBISHI CHEM CORP) 23 August 2018 (2018-08-23)<br>claims 1-5, paragraphs [0006], [0016]-[0017], [0041], example 1 | 1-9 |
| Y | JP 2016-193600 A (MITSUBISHI PLASTICS INC) 17 November 2016 (2016-11-17)<br>claims 1-16, paragraphs [0012], [0042], [0065], [0080]-[0082], examples 1-8 | 1-9 |
| Y | JP 7-223298 A (ASAHI CHEM IND CO LTD) 22 August 1995 (1995-08-22)<br>claims 1-2, paragraphs [0001], [0013]-[0014], [0016]-[0018], [0054]-[0059], examples 1-10 | 1-9 |

☑ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **04 January 2024** | **16 January 2024** |
| Name and mailing address of the ISA/JP<br>**Japan Patent Office (ISA/JP)**<br>**3-4-3 Kasumigaseki, Chiyoda-ku, Tokyo 100-8915**<br>**Japan** | Authorized officer<br><br>Telephone No. |

Form PCT/ISA/210 (second sheet) (January 2015)

**INTERNATIONAL SEARCH REPORT**

International application No.
**PCT/JP2023/040330**

**C. DOCUMENTS CONSIDERED TO BE RELEVANT**

| Category* | Citation of document, with indication, where appropriate, of the relevant passages | Relevant to claim No. |
|---|---|---|
| Y | JP 11-293103 A (MITSUBISHI ENG PLAST CORP) 26 October 1999 (1999-10-26) claims 1-8, paragraphs [0003]-[0004], [0011]-[0016], examples 1-8 | 1-9 |
| Y | JP 2007-69771 A (DENSO CORP) 22 March 2007 (2007-03-22) claims 1-5, paragraph [0034] | 9 |
| A | WO 2004/109379 A1 (NIPPON POLYESTER CO., LTD.) 16 December 2004 (2004-12-16) entire text, all drawings | 1-9 |
| A | KR 10-2021-0037872 A (SHINIL CHEMICAL INDUSTRY CO., LTD.) 07 April 2021 (2021-04-07) entire text, all drawings | 1-9 |

Form PCT/ISA/210 (second sheet) (January 2015)

**INTERNATIONAL SEARCH REPORT**
**Information on patent family members**

International application No.
**PCT/JP2023/040330**

| Patent document cited in search report | Publication date (day/month/year) | Patent family member(s) | Publication date (day/month/year) |
|---|---|---|---|
| JP 2011-194733 A | 06 October 2011 | (Family: none) | |
| WO 2016/060100 A1 | 21 April 2016 | US 2017/0306089 A1<br>claims 1-11, paragraphs [0003], [0008], [0084], [0092]-[0096], [0178]-[0188], [0202]-[0207], examples 1-11<br>EP 3208087 A1 | |
| JP 2018-131495 A | 23 August 2018 | (Family: none) | |
| JP 2016-193600 A | 17 November 2016 | (Family: none) | |
| JP 7-223298 A | 22 August 1995 | (Family: none) | |
| JP 11-293103 A | 26 October 1999 | (Family: none) | |
| JP 2007-69771 A | 22 March 2007 | (Family: none) | |
| WO 2004/109379 A1 | 16 December 2004 | US 2007/0053031 A1<br>entire text, all drawings | |
| KR 10-2021-0037872 A | 07 April 2021 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2016060100 A
- WO 2021215435 A
- JP 2022080270 A
- JP 2012144604 A
- JP 2019002023 A
- JP 2018090677 A
- JP 2018188496 A
- JP 2017031313 A
- WO 2015190162 A
- JP 2013020130 A
- JP 2018103518 A
- JP 2017213771 A
- JP 2022104214 A
- JP 7021724 B